Europäisches Patentamt

European Patent Office

Office européen des brevets

(11) Numéro de publication : **0 241 879**
**B1**

(12) **FASCICULE DE BREVET EUROPÉEN**

(45) Date de publication du fascicule du brevet :
28.06.89

(51) Int. Cl.⁴ : **F 16 C 33/60**, F 16 C 43/04,
F 16 C 19/18, F 16 C 33/38

(21) Numéro de dépôt : 87105341.9

(22) Date de dépôt : 10.04.87

(54) **Palier à roulement à deux rangées d'éléments de roulement muni d'une pièce de retenue des bagues de roulement, pièce de retenue pouvant être utilisée à cet effet et procédé d'assemblage d'un tel palier.**

(30) Priorité : 14.04.86 FR 8605309

(43) Date de publication de la demande :
21.10.87 Bulletin 87/43

(45) Mention de la délivrance du brevet :
28.06.89 Bulletin 89/26

(84) Etats contractants désignés :
DE ES GB IT SE

(56) Documents cités :
DE–A– 3 319 142
FR–A– 2 138 283
FR–A– 2 492 919

(73) Titulaire : SKF FRANCE
8, Avenue Réaumur
F-92142 Clamar Cedex (FR)

(72) Inventeur : Caron Fabrice
2 Allée Arcoat
F-78180 Montigny le Bretonneux (FR)
Inventeur : Le Quinio, Hervé
65 Boulevard Exelmans
F-75016 Paris (FR)

(74) Mandataire : Casalonga, Axel et al
BUREAU D.A. CASALONGA - JOSSE Morassistrasse
8
D-8000 Munich 5 (DE)

## Description

La présente invention a pour objet un palier à roulement à deux rangées d'éléments de roulement du type comportant une première bague constituée d'une seule pièce présentant deux pistes de roulement et un ensemble de deux bagues indépendantes présentant chacune une piste de roulement.

Un des problèmes qu'il convient de résoudre dans des paliers à roulement de ce type est de réaliser une liaison ou solidarisation axiale des deux bagues indépendantes pendant les opérations de manutention, de transport, de montage et éventuellement de démontage du palier à roulement dans l'ensemble mécanique où il s'intègre lors de son fonctionnement normal.

On a déjà prévu de tels moyens de solidarisation axiale de bagues indépendantes de paliers. C'est ainsi par exemple que l'on a prévu dans le brevet français 2 439 902 d'utiliser une douille en matière plastique emmanchée dans l'alésage des deux bagues indépendantes constituant ici des bagues intérieures. On réalise ainsi la liaison des deux bagues indépendantes intérieures pendant les opérations de manutention et de transport jusqu'au montage du palier à roulement dans l'ensemble mécanique avec lequel il est destiné à coopérer. Un tel moyen de solidarisation axiale présente cependant l'inconvénient qu'il est nécessaire de chasser cette douille en matière plastique avant de procéder à l'emmanchement des bagues intérieures sur l'arbre. Lorsque la douille en matière plastique est ainsi retirée, les bagues intérieures ne sont plus retenues et risquent alors de se démonter avec tous les risques que cela entraîne (mélange, endommagement, pollution, risque de perte des éléments roulants). Les mêmes inconvénients apparaissent si l'on est amené à démonter le palier à roulement à l'extérieur de son logement.

Par ailleurs si on laisse en position une telle douille de solidarisation axiale emmanchée dans l'alésage des bagues intérieures, il en résulte un marquage et une détérioration inadmissibles de l'arbre. La même remarque peut être faite en ce qui concerne par exemple l'utilisation d'une douille venant enserrer les deux bagues intérieures indépendantes dans le brevet français 2 078 551. Le sertissage d'une douille métallique est une solution complexe à mettre en œuvre. Elle entraîne par ailleurs la formation d'une portée de mauvaise qualité sur l'arbre.

Une autre solution consistant à sertir sur la surface extérieure de deux bagues extérieures indépendantes extérieure un anneau ou un plot métallique, est décrite dans le brevet français 2 104 411. Si la liaison ainsi réalisée est relativement efficace, il n'en reste pas moins qu'elle est difficile et coûteuse à mettre en œuvre.

Il a été également envisagé dans le brevet français 2 439 902 déjà cité d'utiliser à titre de moyens de retenue axiale des deux bagues intérieures indépendantes, des anneaux élastiques ou des flasques rendus axialement solidaires de la bague extérieure. La liaison axiale entre les bagues intérieures indépendantes est obtenue par interaction de ces éléments rapportés avec les éléments de roulement, et des redans appropriés pratiqués dans les bagues intérieures. Indépendamment de la complexité de tels moyens on notera qu'il n'est pas souhaitable de faire passer des efforts par l'intérieur des éléments de roulement qui ne tournent pas avant montage car cela entraîne des risques importants d'endommagement en particulier si les éléments de roulement viennent en contact avec les flasques, joncs ou anneaux élastiques, qui assurent la solidarisation axiale des deux bagues indépendantes.

On connaît également par le brevet français 2 489 905 un dispositif de solidarisation axiale de deux bagues indépendantes intérieures au moyen d'un anneau élastique venant s'encliqueter dans des gorges aménagées à cet effet sur les deux bagues indépendantes intérieures. Cette solution fait cependant appel à un équipement rapporté qu'il est nécessaire de fabriquer séparément et dont l'assemblage nécessite des précautions et des opérations particulières relativement complexes.

Enfin le brevet français 2 492 919 décrit un moyen de solidarisation axiale de deux bagues intérieures indépendantes d'un roulement à billes à deux rangées de billes au moyen de languettes solidaires de la cage du roulement, ces languettes venant coopérer avec des gorges aménagées spécialement sur les deux bagues indépendantes. Malgré les avantages apparents d'un tel moyen qui ne comporte pas de pièce supplémentaire séparée de la cage, un tel dispositif présente toutefois des risques inadmissibles et en particulier le risque de frottement des languettes de maintien de la cage sur les parois des gorges d'encliquetage des deux bagues indépendantes lors du fonctionnement du roulement.

La présente invention a pour objet un palier à roulement de ce type dans lequel les moyens permettant d'assurer la solidarisation axiale des deux bagues indépendantes sont de réalisation simple et totalement exemptes de tout risque d'interférence avec le fonctionnement du palier à roulement après son montage dans l'ensemble à l'intérieur duquel il s'intègre.

La présente invention a également pour objet un tel palier à roulement dans lequel les moyens de solidarisation axiale des deux bagues indépendantes ne comportent aucune pièce indépendante supplémentaire au stade de la fabrication.

La présente invention a également pour objet une pièce de retenue unique capable d'assurer à la fois la solidarisation axiale des deux bagues indépendantes et le maintien des positions relatives des éléments de roulement entre les deux bagues comme c'est le cas avec une cage de type classique.

Enfin la présente invention a également pour objet un procédé d'assemblage d'un tel palier utilisant une telle pièce de retenue.

Le palier à roulement à deux rangées d'éléments de roulement selon l'invention est du type comportant une première bague constituée d'une seule pièce présentant deux pistes de roulement et un ensemble de deux bagues indépendantes présentant chacune une piste de roulement. Le palier comporte en outre des moyens de maintien des positions relatives des éléments de roulement entre les deux bagues ainsi que des moyens de solidarisation axiale des deux bagues indépendantes. Selon l'invention la solidarisation axiale des deux bagues indépendantes et le maintien des positions relatives d'au moins une partie des éléments de roulement du palier sont réalisés par deux parties d'une pièce de retenue présentant, avant assemblage du palier, une ou plusieurs zones de liaison affaiblies en vue de leur rupture lors de l'assemblage du palier.

Les zones d'assemblage affaiblies sont de préférence placées de façon que la position axiale des deux parties de la pièce de retenue soit différente avant et après assemblage de façon à entraîner automatiquement la rupture desdites zones de liaison lors de l'assemblage du palier.

La partie de la pièce de retenue assurant la solidarisation axiale des deux bagues indépendantes comprend de préférence une douille munie de crochets dirigés radialement, adaptés pour coopérer avec au moins une gorge pratiquée dans l'alésage de l'une des bagues indépendantes du palier.

La douille présente avantageusement des surfaces de butée axiales adaptées pour coopérer avec une surface correspondante de l'une des bagues indépendantes pour entraîner la rupture des zones de liaison lors de l'assemblage du palier.

De cette manière il est possible de réaliser la pièce de retenue, par exemple en matière plastique moulée, convenablement renforcée au moyen de charges appropriées, exactement de la même manière qu'une cage de type classique. Les éléments de roulement sont maintenus par la partie formant cage de la pièce de retenue tandis que la solidarisation axiale des deux bagues indépendantes est obtenue automatiquement au moment de l'assemblage de l'ensemble, par rupture des zones de liaison affaiblies, la douille se séparant alors de la partie formant cage de la pièce de retenue.

Divers modes de réalisation peuvent être envisagés pour une telle pièce de retenue.

Selon un mode de réalisation avantageux, la partie de la pièce de retenue assurant la solidarisation axiale des deux bagues indépendantes comprend une douille munie de deux rangées de crochets, chaque rangée étant adaptée pour coopérer avec une gorge pratiquée dans l'une desdites bagues indépendantes. La partie de la pièce de retenue assurant le maintien des éléments de roulement peut alors de préférence comprendre une cage munie d'alvéoles en quinconce pour recevoir les éléments de roulement des deux rangées d'éléments de roulement.

Les zones de liaison affaiblies sont de préférence constituées par au moins trois plots de liaison radiale présentant une zone d'épaisseur réduite. Les plots de liaison sont solidaires de la douille dans un plan radial de symétrie du palier et solidaires de la cage en position décalée par rapport au plan radial de symétrie du palier. De cette manière l'assemblage de l'ensemble du palier à roulement entraîne la rupture des plots de liaison.

Dans un autre mode de réalisation également avantageux, la partie de la pièce de retenue assurant le maintien des éléments de roulement comprend une première cage munie d'alvéoles pour recevoir les éléments de roulement d'une des rangées d'éléments de roulement. Les éléments de roulement de l'autre rangée sont retenus par une cage indépendante de type classique.

Selon un autre mode de réalisation particulièrement intéressant, la solidarisation axiale des deux bagues indépendantes est réalisée au moyen de deux pièces de retenue identiques montées symétriquement par rapport au plan radial de symétrie du palier. Chaque pièce de retenue comprend une cage munie d'alvéoles adaptées pour recevoir les éléments de roulement de l'une des rangées d'éléments de roulement ainsi qu'une douille munie d'une rangée de crochets adaptés pour coopérer avec une gorge pratiquée dans la bague indépendante qui présente la piste de roulement pour l'autre rangée d'éléments de roulement.

Les crochets sont de préférence disposés à l'extrémité de languettes axiales équidistantes séparées par des évidements complémentaires de façon que les deux pièces de retenue puissent venir s'imbriquer l'une dans l'autre.

Dans ce mode de réalisation, les crochets de chaque pièce de retenue présentent également de préférence une surface inclinée adaptée pour coopérer avec une surface inclinée complémentaire du fond des évidements de l'autre pièce de retenue de façon à réaliser, après assemblage, un renforcement de l'action des crochets par conjugaison de forme des deux surfaces inclinées complémentaires.

Dans ce mode de réalisation, on conçoit que les deux pièces de retenue utilisées sont identiques, de sorte qu'il est possible de les fabriquer au moyen d'un seul moule.

L'invention peut s'appliquer au cas où les deux bagues indépendantes forment la bague intérieure ou la bague extérieure du palier. Elle peut s'appliquer à tout type de paliers à roulement en particulier des roulements à billes à contact oblique, des roulements à rouleaux cylindriques, coniques, etc.

L'invention a également pour objet une pièce de retenue réalisée en matière plastique moulée présentant une partie en forme de cage cylindrique munie d'alvéoles capables de recevoir des éléments de roulement d'un palier à roulement à deux rangées d'éléments de roulement du type comportant une première bague constituée d'une seule pièce et un ensemble de deux bagues indépendantes. La pièce comprend, venue de moulage, une douille concentrique à la cage et reliée à cette dernière par une ou plusieurs zones de liaison affaiblies en vue de leur rupture lors de l'assemblage du palier.

La douille présente de préférence une pluralité de crochets dirigés radialement.

Dans un mode de réalisation avantageux, la douille est reliée à la cage par au moins trois plots de liaison radiale présentant une zone d'épaisseur réduite. Les plots de liaison sont solidaires de la douille dans un plan radial de symétrie de la douille et solidaires de la cage dans une position décalée par rapport au plan radial de symétrie de la cage.

L'assemblage d'un palier à roulement à deux rangées d'éléments de roulement comportant une pièce de retenue selon l'invention se fait de la manière suivante :

on introduit les éléments de roulement dans la partie formant cage de la pièce de retenue,

on place l'ensemble sur les pistes de roulement de la bague constituée d'une seule pièce,

on introduit axialement les deux bagues indépendantes jusqu'à ce qu'elles viennent en butée sur les bords de la partie en forme de douille de la pièce de retenue,

on exerce une poussée axiale sur les bagues indépendantes jusqu'à ce qu'une rangée de crochets de la douille pénètre dans la gorge de l'une des bagues indépendantes et vienne en butée sur la bague indépendante,

on poursuit l'action de poussée axiale sur les bagues indépendantes jusqu'à la rupture des zones de liaison affaiblies de la pièce de retenue et la pénétration de l'autre rangée de crochets dans la gorge de l'autre bague indépendante.

Dans le cas d'un palier à roulement comportant une pièce de retenue en deux parties symétriques, l'assemblage se fait de la manière suivante :

on introduit les éléments de roulement dans la partie formant cage de chaque pièce de retenue,

on place l'ensemble sur les pistes de roulement de la bague constituée d'une seule pièce,

on introduit axialement les deux bagues indépendantes jusqu'à ce qu'elles viennent en butée sur les bords de la partie en forme de douille de chaque pièce de retenue, les pièces formant cage des deux pièces de retenue venant par ailleurs en butée l'une contre l'autre,

on exerce une poussée axiale sur les bagues indépendantes jusqu'à la rupture des zones de liaison affaiblies de l'une des pièces de rupture et la pénétration des crochets de cette pièce de retenue dans la gorge de l'une des bagues indépendantes,

on poursuit l'action de poussée axiale sur les bagues indépendantes jusqu'à la rupture des zones de liaison affaiblies de l'autre pièce de retenue et la pénétration des crochets de cette autre pièce de retenue dans la gorge de l'autre bague indépendante.

L'invention sera mieux comprise à l'étude de quelques modes de réalisation décrits à titre d'exemples nullement limitatifs et illustrés par les dessins annexés sur lesquels :

la figure 1 est une vue en coupe d'un palier à roulement selon l'invention après assemblage et rupture des plots de liaison de la pièce de retenue ;

la figure 2 est une vue partielle développée d'une pièce de retenue selon l'invention ;

les figures 3 à 7 illustrent les différentes étapes de l'assemblage du palier à roulement de la figure 1 ;

la figure 8 est une vue en coupe analogue à la figure 1 d'une variante de palier à roulement selon l'invention ;

la figure 9 est une vue en coupe analogue d'une autre variante de palier à roulement selon l'invention ;

la figure 10 est une vue partielle développée d'une pièce de retenue utilisée dans le palier à roulement de la figure 9 ;

les figures 11 à 17 illustrent les différentes étapes de l'assemblage du palier à roulement de la figure 9 ;

la figure 18 est une vue en coupe analogue à la figure 2 d'une autre variante de palier à roulement selon l'invention utilisant deux pièces de retenue identiques ;

la figure 19 est une vue partielle développée d'une des pièces de retenue utilisées dans le palier à roulement de la figure 18 ; et

les figures 20 à 25 illustrent les différentes étapes de l'assemblage du palier à roulement de la figure 18.

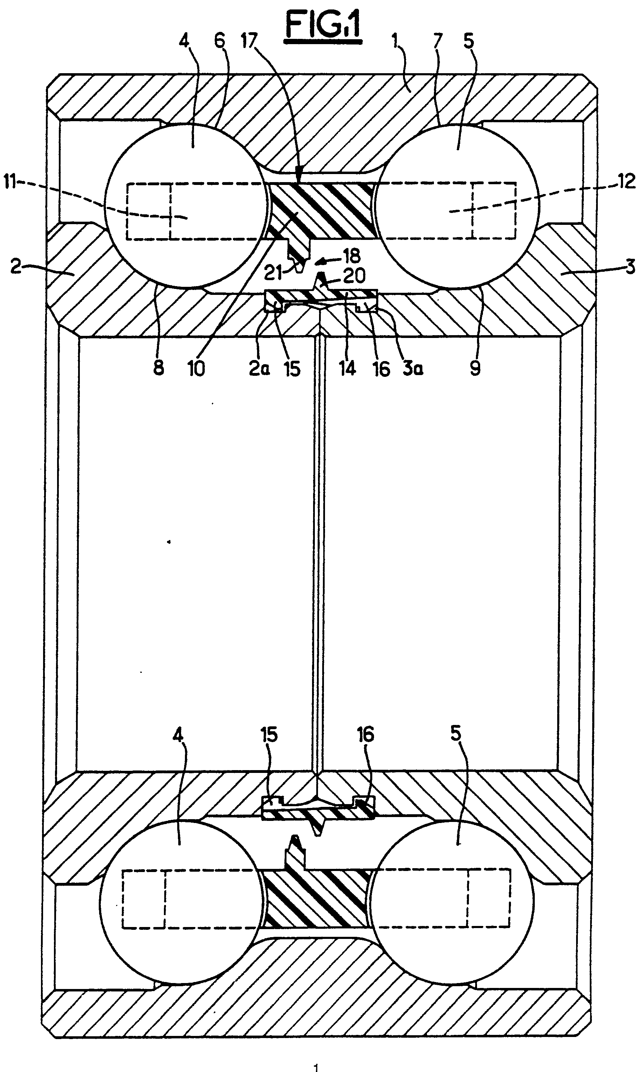

Tel qu'il est illustré sur la figure 1, le palier à deux rangées de billes à contacts obliques selon l'invention comprend une bague extérieure 1 et deux bagues intérieures indépendantes 2 et 3. Deux rangées de billes référencées respectivement 4 et 5 sont interposées entre les bagues extérieures 1 et intérieures 2, 3 et peuvent rouler de manière classique sur les pistes de roulement 6 et 7 pratiquées dans l'alésage de la bague extérieure 1 et sur chacune des pistes de roulement 8 et 9 pratiquées respectivement sur la surface cylindrique externe des deux bagues intérieures indépendantes 2 et 3.

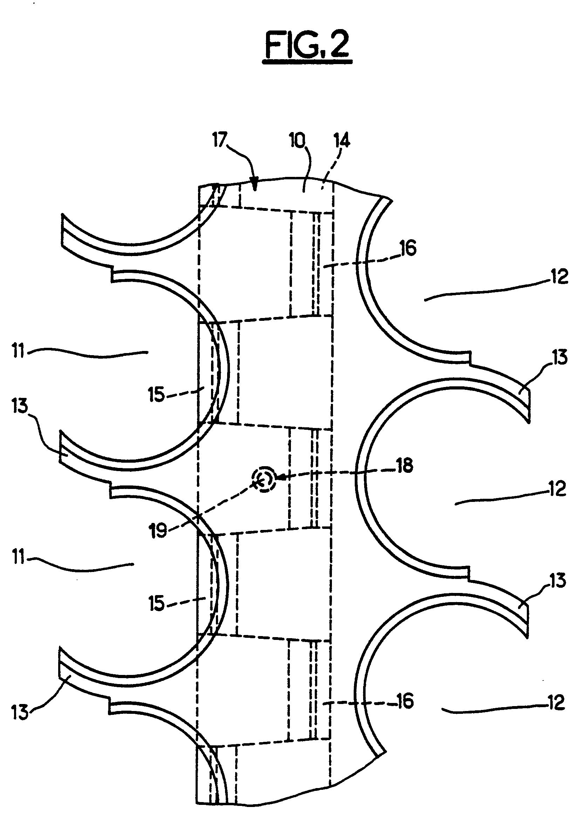

Les positions relatives des billes 4 et 5 sont assurées par une cage 10 de forme générale cylindrique. La cage 10, visible sur la vue développée de la figure 2, présente sur sa périphérie, de chaque côté de son plan radial de symétrie une pluralité d'alvéoles 11 et 12 ouvertes vers l'extérieur et recevant chacune une bille 4 ou 5. Les alvéoles 11 et 12 sont délimitées par des branches élastiques 13 qui suivent le contour des billes 4, 5 et permettent un encliquetage élastique de ces dernières dans lesdites alvéoles.

La solidarisation axiale des deux bagues internes indépendantes 2, 3 est assurée par une douille 14 qui présente deux rangées de crochets 15, 16 disposés latéralement en quinconce comme on peut le voir sur la figure 2. Les crochets 15 et 16 présentent des extrémités en saillie dirigées radialement vers l'intérieur qui coopèrent respectivement avec des gorges annulaires 2a, 3a pratiquées respectivement dans la surface cylindrique externe des deux bagues internes indépendantes 2, 3.

La cage 10 et la douille 14 sont concentriques et font initialement partie intégrante d'une seule pièce de retenue référencée 17 dans son ensemble et visible en partie sur la figure 2. La partie formant cage 10 de la pièce de retenue 17 est attachée initialement à la pièce formant douille 14 par trois plots radiaux 18 qui présentent une portion affaiblie de section réduite 19 de façon à faciliter la séparation des pièces 10 et 14 l'une de l'autre par rupture de ces zones affaiblies.

La pièce de retenue 17 est avantageusement réalisée en matière plastique additionnée de charges convenables et fabriquée par moulage dans un moule unique qui permet donc la fabrication simultanée de la cage 10 et de la douille 14 initialement solidaires par les plots de liaison 18.

La partie 20 des plots de liaison 18 qui fait saillie sur la surface périphérique extérieure de la douille 14 est située dans un plan radial de symétrie de la douille 14. Au contraire, la partie 21 qui est solidaire de l'alésage de la cage 10 est placée dans une position décalée par rapport au plan radial de symétrie de la cage 10. On notera que le plan de joint du moule de fabrication de la pièce 17 passe précisément par le plan de symétrie des trois plots de liaison 18 ce qui facilite grandement la fabrication de la pièce de retenue 17.

Par ailleurs la position décalée des portions 21 des plots de liaison 18 permet d'obtenir très facilement la séparation de la cage 10 et de la douille 14 lors de l'opération d'assemblage du palier de l'invention.

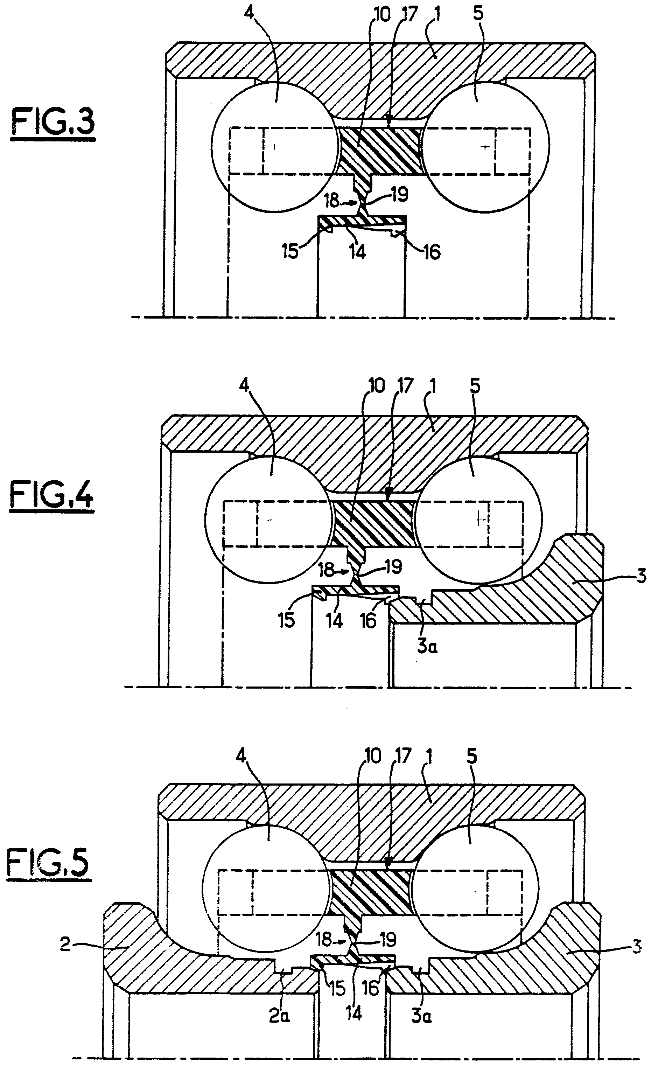

On va maintenant expliquer en se référant aux figures 3 à 7 les différentes étapes de l'assemblage.

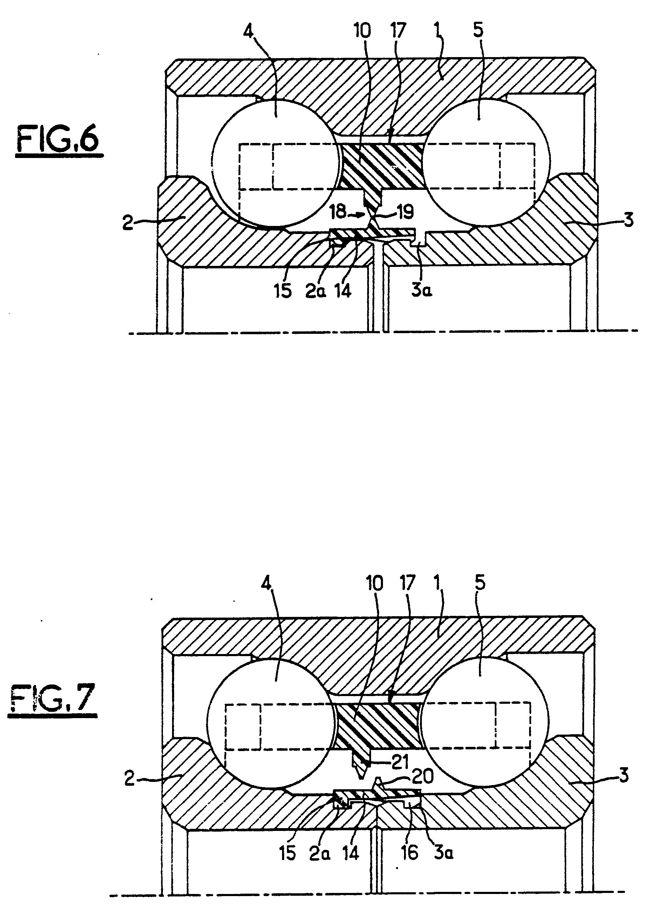

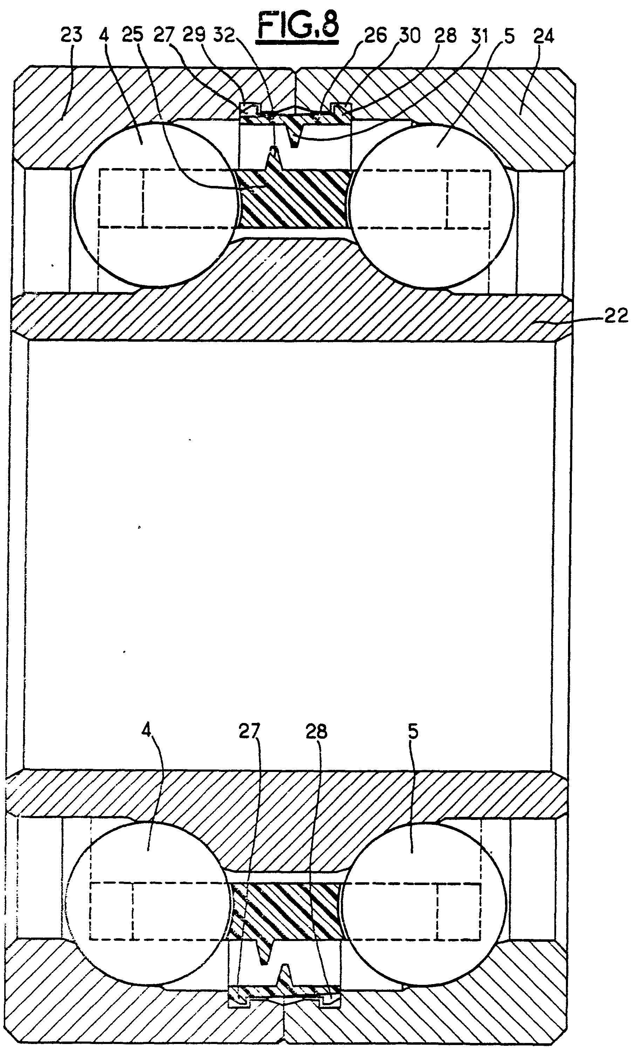

Les billes 4 et 5 sont successivement introduites dans les alvéoles de la cage 10 qui fait partie intégrante de la douille 14, jusqu'au contact avec les pistes de roulement de la bague extérieure 1. Comme illustré sur les figures 4 et 5 on vient ensuite successivement introduire les deux bagues intérieures 2 et 3 jusqu'à ce que les extrémités des crochets 15 et 16 viennent buter sur le bord extrême des deux bagues internes 2 et 3 (figure 5). Une poussée axiale est alors exercée sur les deux bagues internes 2, 3 ce qui provoque tout d'abord la pénétration, par exemple des crochets 15, dans la gorge 2a de la bague interne 2 comme illustré sur la figure 6. La poursuite de cette poussée axiale (figure 7) provoque la pénétration de la deuxième rangée de crochets 16 dans la gorge 3a de l'autre bague intérieure 3.

On notera que le bord externe du crochet 15 vient en butée axiale sur le bord de la gorge 2a de sorte que la poussée axiale provoque la rupture des trois plots de liaison 18 grâce à la position décalée de la partie 21 liée à la cage 10.

La position finale représentée sur la figure 7 correspond à celle de la figure 1. Dans cette position, il apparaît que les deux bagues intérieures 2, 3 sont maintenues axialement par la douille 14 et en particulier au moyen des deux rangées de crochets 15, 16 qui, après encliquetage élastique dans les deux gorges 2a, 3a ne peuvent ressortir de ces dernières et maintiennent ainsi la solidarisation axiale des deux bagues internes 2, 3.

Bien que dans le mode de réalisation qui vient d'être décrit, les bagues indépendantes aient été les deux bagues intérieures 2, 3 on comprendra que cette disposition puisse être inversée comme illustré sur la variante de la figure 8.

Dans cette variante, sur laquelle les pièces identiques portent les mêmes références, la bague en une seule pièce est la bague intérieure 22 tandis que les deux bagues indépendantes 23, 24 constituent les bagues extérieures. La pièce de retenue est constituée d'une partie formant cage 25 et d'une partie en forme de douille cylindrique 26 disposée concentriquement à la cage 25 et à l'extérieur de cette dernière contrairement à ce qui était le cas dans le mode de réalisation des figures précédentes où la douille 14 était disposée concentriquement à l'intérieur de la cage 10. La douille 26 comporte, comme la douille 14, des crochets 27, 28 coopérant avec des gorges 29, 30 pratiquées respectivement dans les bagues extérieures 23, 24 de façon à assurer la solidarisation de ces dernières. La douille 26 et la cage 25 sont initialement deux parties d'une seule et même pièce, liées entre elles par trois plots comportant chacun une partie 31 liée à la douille 26 dans son plan radial de symétrie et une partie 32 liée à la cage 25 en position décalée par rapport à son plan radial de symétrie. La rupture des plots de liaison est obtenue comme précédemment lors de l'assemblage du palier à deux rangées de billes à contact oblique.

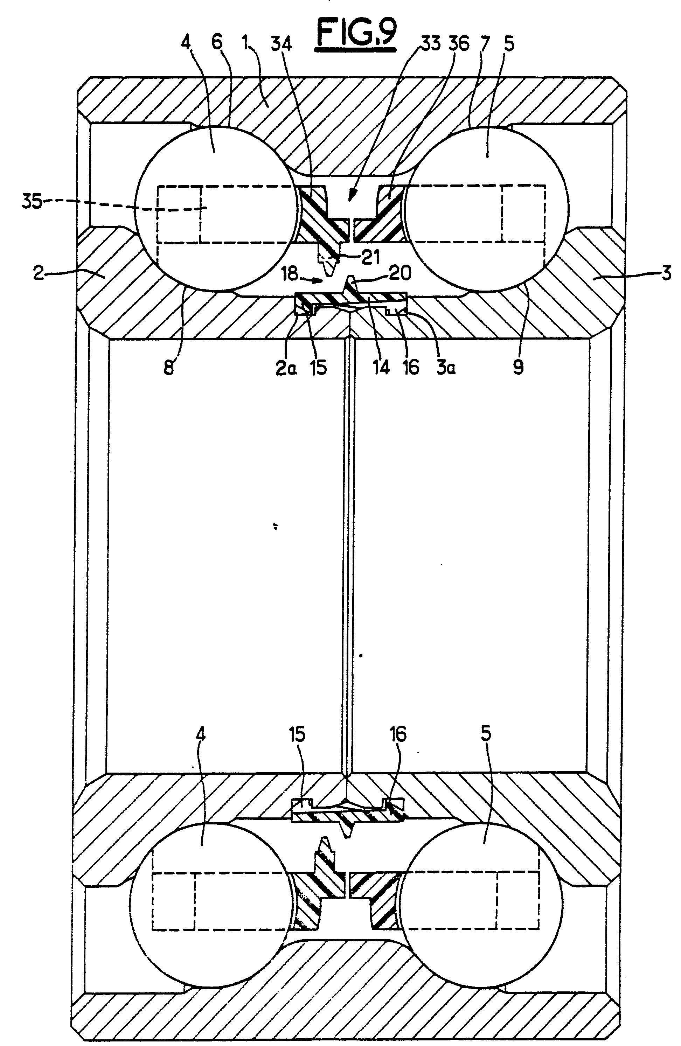

Dans la variante illustrée sur la figure 9 on retrouve un palier à deux rangées de billes à contacts obliques analogue à celui illustré sur la figure 1. Les pièces identiques portent les mêmes références.

On retrouve en particulier la bague extérieure en une seule pièce 1 et les deux bagues intérieures indépendantes 2, 3 présentant les mêmes gorges extérieures 2a, 3a.

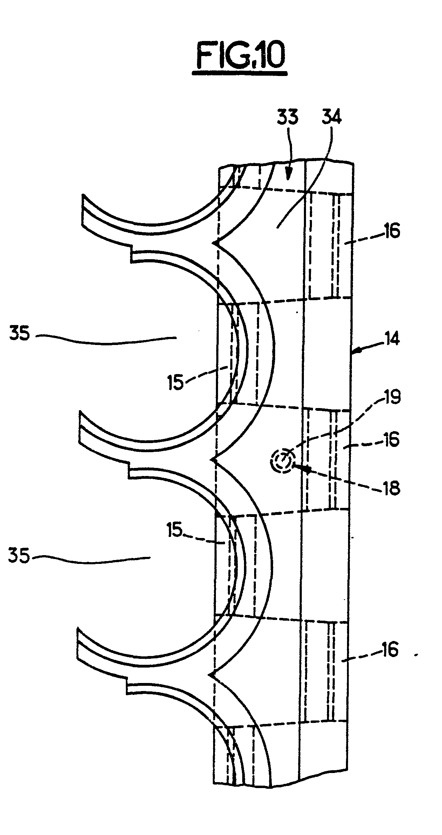

La différence de cette variante réside dans l'utilisation d'une pièce de retenue de structure différente visible en développement sur la figure 10 et référencée 33 dans son ensemble.

La pièce de retenue 33 présente une douille 14 identique à la précédente et une partie formant cage 34 munie d'une seule rangée latérale d'alvéoles 35 coopérant avec l'une des rangées de billes 4. La liaison entre la douille 14 munie de ses crochets 15 et 16 et la cage 34 est réalisée au moyen de trois plots de liaison comme précédemment. La portion 20 des plots 18 solidaire de la douille 14 se trouve comme précédemment dans le plan radial de symétrie de la douille 14. La position des parties 21 sur l'alésage de la cage 14 est décalée par rapport à l'axe de symétrie du palier dans son ensemble après montage, comme on peut le voir en particulier sur la figure 9, ce qui entraîne comme précédemment la rupture de la liaison affaiblie lors du montage du palier. La deuxième rangée de billes 5 coopère avec une cage indépendante 36 qui est capable de venir en butée avec la cage 34 lors du montage.

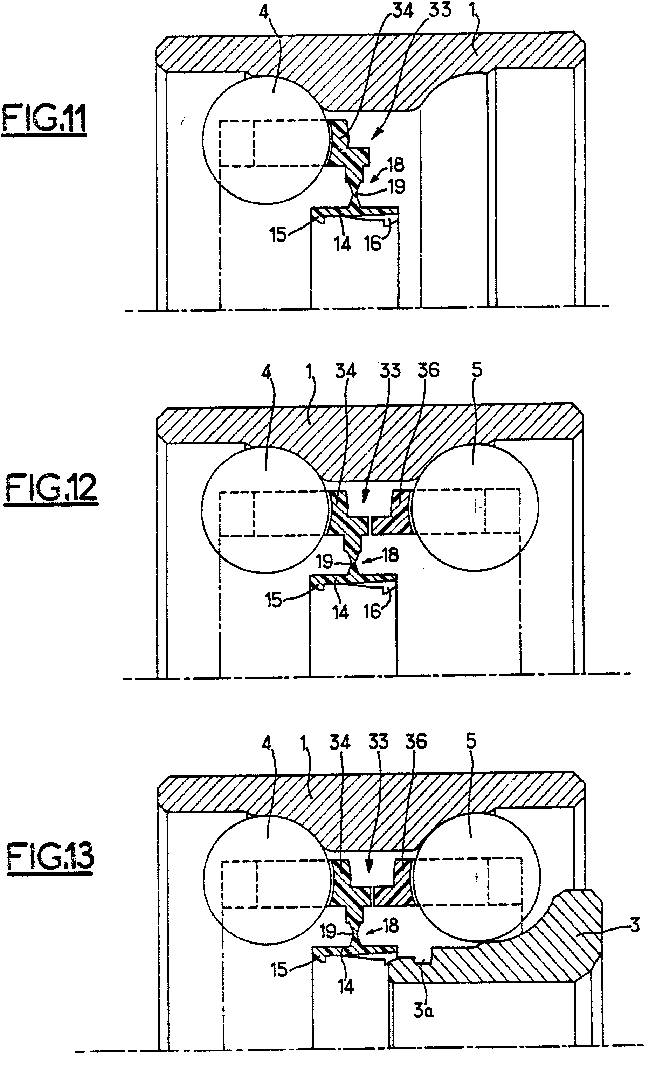

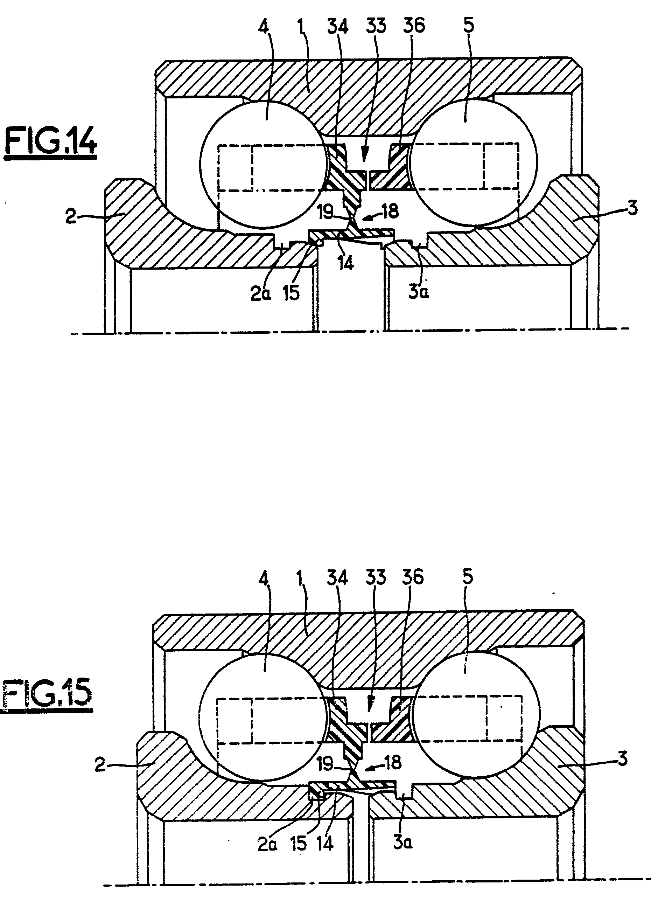

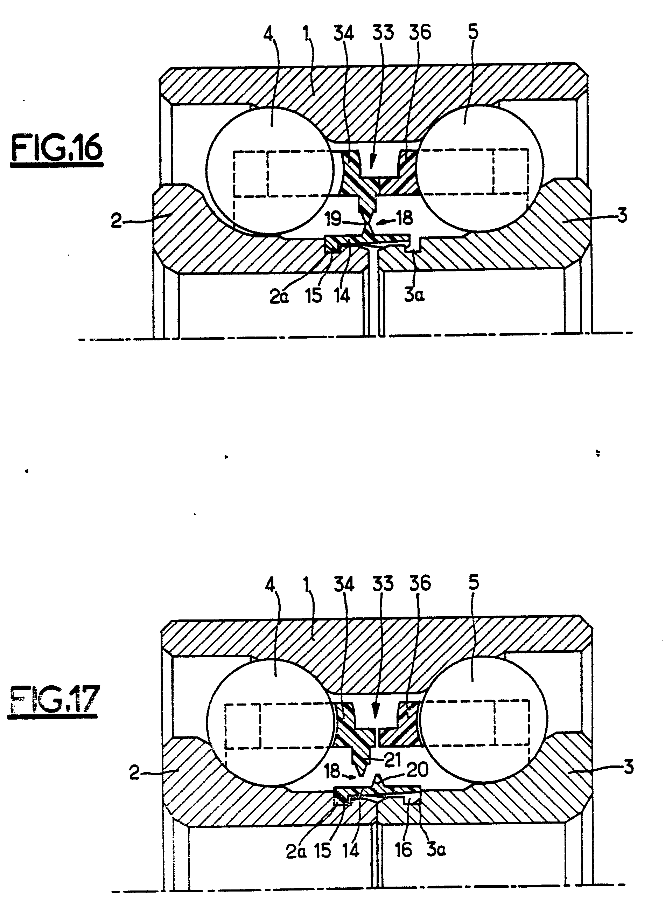

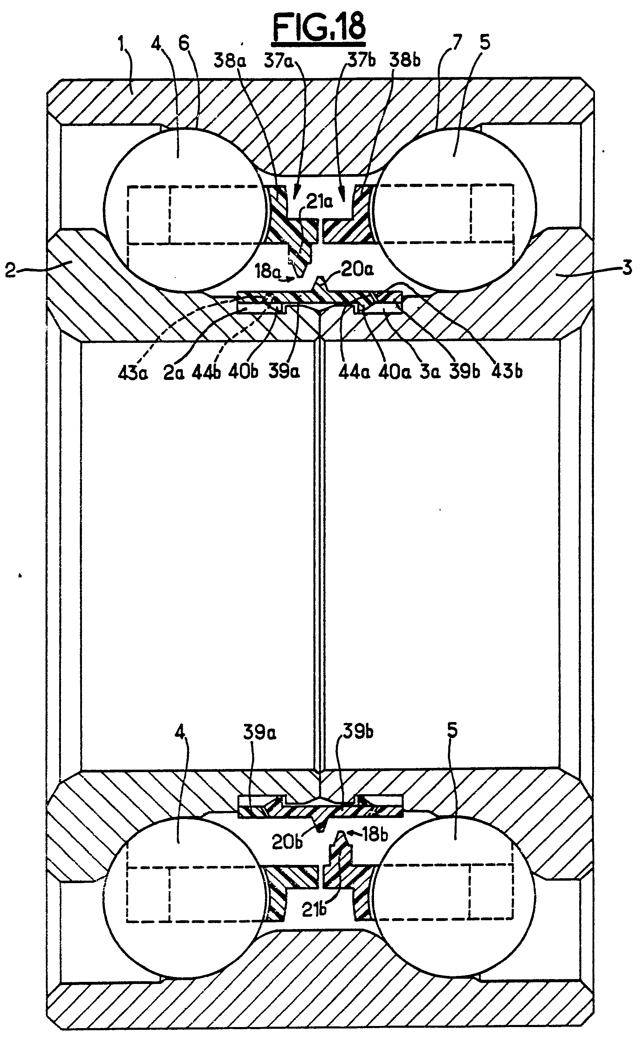

Les différentes phases du montage sont illustrées sur les figures 11 à 17. La première rangée de billes 4 introduites dans les alvéoles 35 de la cage 34 de la pièce de retenue 33 est tout d'abord montée dans l'alésage de la bague extérieure 1 comme illustré sur la figure 11. On vient ensuite introduire la deuxième rangée de billes 5 avec leur cage indépendante 36 (figure 12). Les deux bagues intérieures indépendantes 2, 3 sont ensuite successivement introduites comme illustré sur les figures 13 et 14 jusqu'à ce que les crochets 15 et 16 viennent en butée sur les bords extérieurs des bagues intérieures 2, 3 (figure 14). On exerce alors une poussée axiale sur les deux bagues intérieures 2, 3 jusqu'à ce que la rangée de crochets 15 se trouvant du côté de la cage 34 pénètre dans la gorge 2a de la bague intérieure 2 comme illustré sur la figure 15. La poursuite de la poussée axiale, illustrée sur la figure 16, entraîne un contact de butée entre la cage 34 faisant partie de la pièce de retenue 33 et la cage indépendant 36 (figure 16). La deuxième rangée de crochets 16 pénètre alors par encliquetage élastique dans la gorge 3a en même temps qu'intervient la séparation de la douille 14 et de la cage 34 par rupture des trois plots de liaison 18 affaiblis dans leur zone 19. La position finale de la figure 17 correspond à la figure 9. Dans cette position les deux bagues intérieures 2, 3 sont maintenues axialement grâce aux deux rangées de crochets 15 et 16 de la douille 14.

Bien que dans ce mode de réalisation on ait à nouveau illustré l'invention comme c'était le cas pour la figure 1 sur la base d'un roulement à billes à deux rangées de billes à contact oblique comportant une bague extérieure d'une seule pièce et deux bagues intérieures indépendantes, on comprendra que la même variante pourrait sans modification importante être appliquée au cas où c'est la bague intérieure qui est en une seule pièce comme illustré sur la figure 8.

La variante qui vient d'être décrite dans laquelle la cage du roulement est en deux parties peut être avantageuse dans le cas où les deux rangées d'éléments de roulement doivent être plus écartées que dans le mode de réalisation illustré sur la figure 1.

La variante illustrée sur la figure 18 s'applique également à une situation de ce type.

Cette variante est illustrée à l'aide d'un roulement à billes à deux rangées de billes à contact oblique comportant, comme dans le cas de la figure 1, une bague extérieure unique 1 et deux bagues intérieures indépendantes 2, 3. Sur la figure 18 et les figures suivantes, les pièces identiques aux modes de réalisation précédents portent les mêmes références.

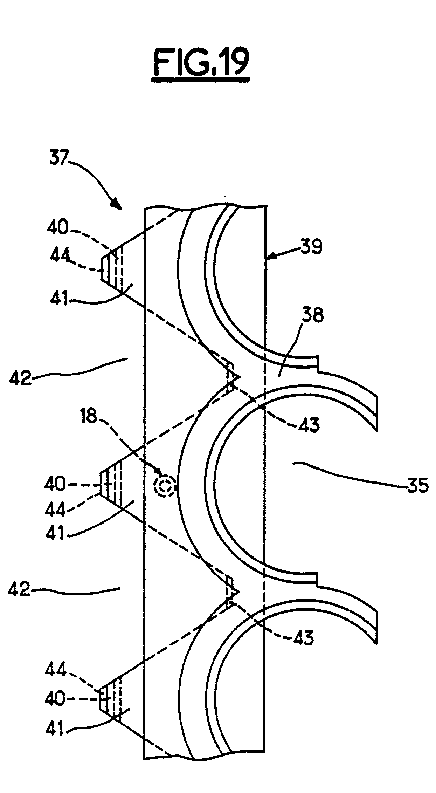

Dans ce mode de réalisation, on utilise deux pièces de retenue identiques dont l'une 37 est représentée en développement partiel sur la figure 19. Chaque pièce de retenue 37 présente une partie 38 formant cage comportant une pluralité d'alvéoles 35 destinées à recevoir les billes de l'une des rangées de billes du roulement. La pièce de retenue comporte également une partie en forme de douille 39 munie d'une pluralité de crochets 40 dont les extrémités font saillie radialement vers l'intérieur. La douille 39 est concentrique à la cage 38 et disposée ici à l'intérieur de la cage 38. Les crochets 40 sont disposés à l'extrémité de languettes axiales 41 séparées par des évidements complémentaires 42. La douille 39 est donc constituée en dents de scie par une succession de languettes 41 de forme sensiblement triangulaire séparées par des évidements de forme et de dimension identiques. Les crochets 40 sont placés à l'extrémité des languettes 41 c'est-à-dire à l'opposé des alvéoles 35 de la cage 38. Le fond 43 de chaque évidement 42 est incliné par rapport à un plan radial. De la même manière l'extrémité des crochets 40 présente une surface inclinée 44 dont l'inclinaison est complémentaire de celle des surfaces inclinées 43. La liaison entre la cage 38 et la douille 39 est réalisée par trois plots 18 solidaires par une portion 20 d'une languette 41 de la douille 39 et par une portion 21 de la cage 38.

Dans ce mode de réalisation, les deux pièces de retenue 37 qui sont identiques peuvent donc être fabriquées par moulage à l'aide d'un seul moule, les deux pièces 37 pouvant ensuite s'imbriquer l'une dans l'autre grâce à leur forme complémentaire.

Sur les figures 18 et 20 à 25, les différents éléments de la pièce de retenue 37 coopérant avec la première rangée de billes 4 seront affectés de l'indice a tandis que l'ensemble des éléments de l'autre pièce de retenue 37 coopérant avec la deuxième rangée de billes 5 seront affectés de la référence b.

Après assemblage, comme illustré sur la figure 18 les bagues indépendantes intérieures 2, 3 sont rendues solidaires axialement grâce aux deux douilles 39a et 39b imbriquées l'une dans l'autre. En particulier, les crochets 40a pénètrent dans la gorge 3a de la bague interne 3 qui coopère avec la deuxième rangée de billes 5. De la même manière les crochets 40b de la douille 39b ont pénétré dans la gorge 2a de la bague interne 2 qui coopère avec la première rangée de billes 4. Les surfaces inclinées 43b coopèrent avec les surfaces inclinées 44a à l'intérieur de la gorge 3a tandis que les surfaces inclinées 43a coopèrent avec les surfaces inclinées 44b dans la gorge 2a.

Dans le plan de coupe visible sur la partie haute de la figure 18, on a représenté les parties 20a et 21a des plots de liaison 18a qui relient la demi-cage 38a à la demi-douille 39a, lesdits plots de liaison ayant été brisés au moment de l'assemblage du palier. Sur la partie basse de la figure 18 on a représenté au contraire, dans un autre plan de coupe, les parties 20b et 21b des plots 18b qui relient la demi-douille 39b à la demi-cage 38b. Dans les deux cas on notera que les portions 20a et 20b des plots de liaison 18a, 18b sont placées de façon à se situer, après montage du palier, dans le plan radial de symétrie de ce dernier ainsi que dans le plan radial de symétrie de la douille formée par l'assemblage des deux demi-douilles 39a, 39b. Au contraire les parties 21a et 21b des plots de liaison 18a et 18b sont décalées par rapport à ce même plan radial de symétrie de façon à permettre comme précédemment la rupture des plots de liaison 18a, 18b lors de l'assemblage du palier.

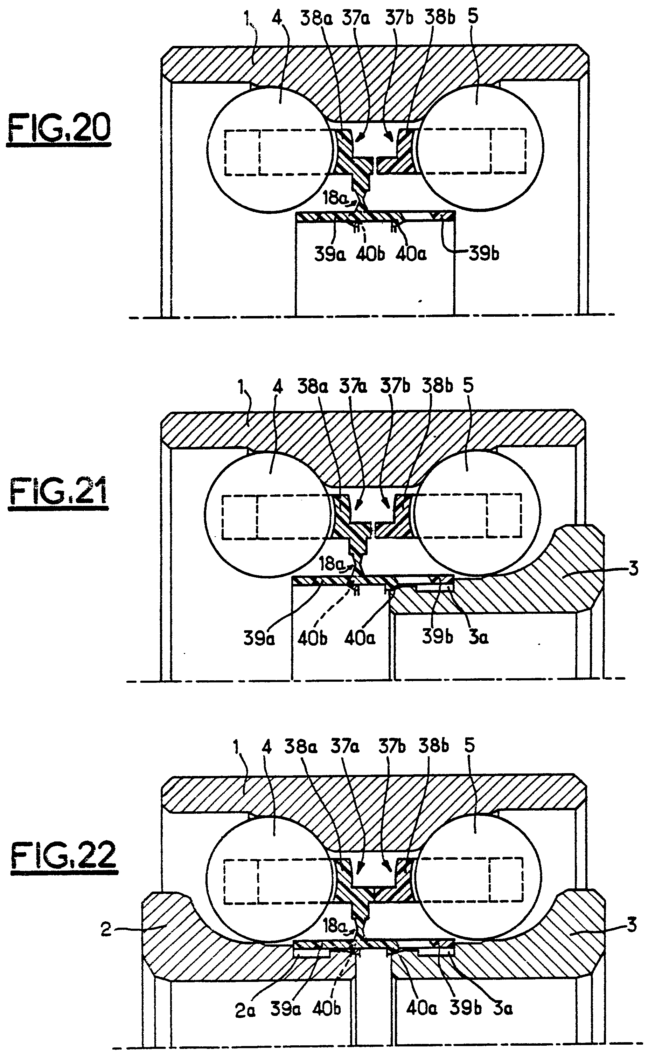

Les différentes étapes de l'assemblage sont illustrées sur les figures 20 à 25.

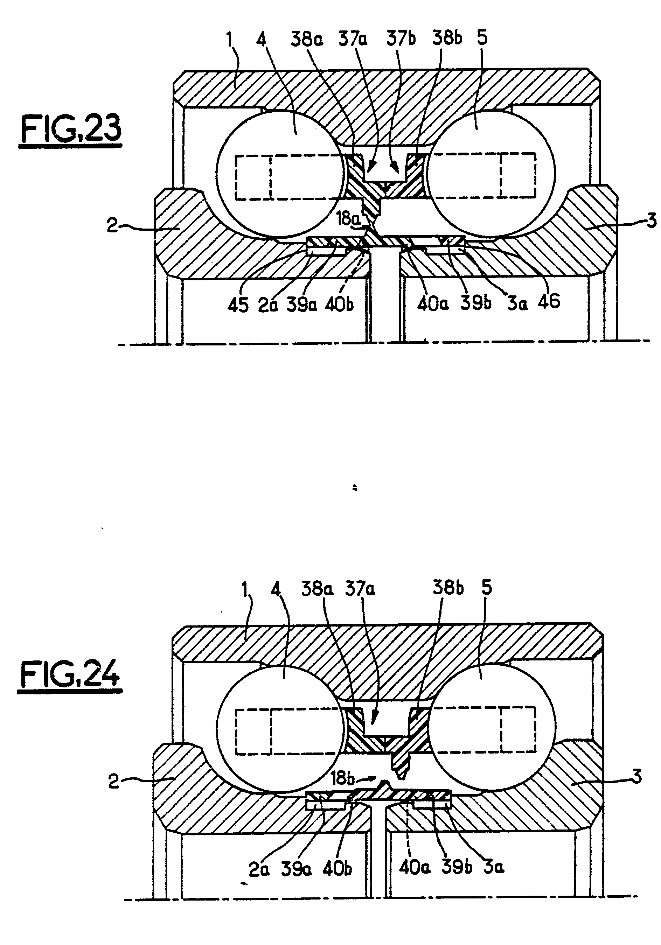

Comme illustré sur la figure 20, on introduit tout d'abord dans la bague extérieure 1, les deux assemblages indépendants constitués respectivement par la première rangée de billes 4 montée dans la première pièce de retenue 37a et la deuxième rangée de billes 5 montée dans la deuxième pièce de retenue 37b. On monte ensuite successivement les deux bagues intérieures indépendantes 2, 3 comme illustré sur les figures 21 et 22 jusqu'à ce que les bagues 1, 3 viennent en contact par leur bord externe avec les crochets respectifs 40a et 40b des deux pièces de retenue 37a, 37b. On exerce une poussée axiale comme illustré sur la figure 23 sur les deux bagues intérieures 2, 3, les deux cages 37a, 37b venant en butée l'un contre l'autre. De la même manière les surfaces de fond des deux douilles 39a, 39b viennent buter sur des épaulements 45 et 46 des gorges 2a, 2b. Jusqu'à ce moment, les plots de liaison 18a, 18b restent intacts, les deux parties de chacune des pièces de retenue 37a, 37b restant solidaires. On notera que sur les figures 20 à 23 on ne voit apparaître, compte tenu du choix du plan de coupe effectué, que les plots de liaison 18a. Il va de soi cependant que les plots de liaison 18b qui se trouvent en dehors du plan de coupe subsistent à ce stade.

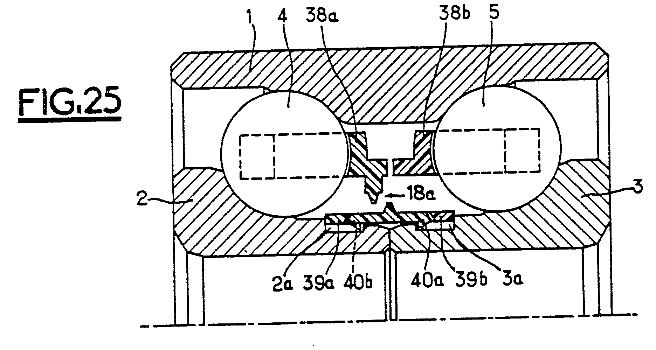

La poursuite de la poussée axiale provoque, comme illustré sur la figure 24, la rupture des plots de liaison de l'une des pièces de retenue 37. A titre d'exemple on a illustré sur la figure 24 un plan de coupe différent de celui des figures 20 à 23 de façon à montrer la rupture des plots 18b provoquée par la poussée axiale précitée. A ce stade, la pièce de retenue 37b coopérant avec la deuxième rangée de billes 5 se trouve donc séparée en une demi-cage 38b et une demi-douille 39b tandis que les deux parties de la pièce de retenue 37a sont toujours solidaires par les plots de liaison 18a. La poursuite de la poussée axiale illustrée sur la figure 25 qui est à nouveau une coupe dans le même plan que les figures 20 à 23, provoque la rupture des plots de liaison 18a au moment de la pénétration des crochets 40a et 40b dans leur gorge respective 2a, 3a. La position finale correspond à la figure 18 dans laquelle la solidarisation axiale des deux bagues intérieures 2, 3 est assurée par les deux demi-douilles 39a, 39b imbriquées l'une dans l'autre.

On notera à l'examen de la figure 18 qu'après encliquetage des crochets respectifs 40a et 40b dans leurs gorges respectives 2a, 3a, toute tentative de désolidarisation axiale des bagues 2, 3 est empêchée par un effet de crochetage des douilles 39a, 39b renforcé par l'interaction des pentes complémentaires des surfaces de fond 43a, 43b avec les faces inclinées 44a, 44b des crochets 40a, 40b. On voit en effet sur la figure 18 qu'une traction tendant à écarter les bagues intérieures 2, 3 a tendance à faire pénétrer les crochets 40a, 40b dans leurs gorges respectives 2a, 3a grâce aux pentes précitées, ce qui a pour effet d'améliorer encore l'effet de crochetage.

Bien que l'invention ait été illustrée principalement sur la base de roulements à billes à deux rangées d'éléments de roulement à contact oblique, on comprendra que l'invention peut être adaptée sans difficulté particulière au cas de paliers à roulement comportant deux rangées d'éléments de roulement différents tels que cylindres, tronc de cône, etc.

## Revendications

1. Palier à roulement à deux rangées d'éléments de roulement (4, 5) comportant une première bague (1) constituée d'une seule pièce présentant deux pistes de roulement et un ensemble de deux bagues indépendantes (2, 3) présentant chacune une piste de roulement ainsi que des moyens de maintien des positions relatives des éléments de roulement entre les bagues et des moyens de solidarisation axiale des deux bagues indépendantes, caractérisé par le fait que la solidarisation axiale des deux bagues indépendantes (2, 3) et le maintien des positions relatives d'au moins une partie des éléments de roulement sont réalisés par deux parties d'une pièce de retenue (17, 33, 37) présentant, avant assemblage du palier, une ou plusieurs zones de liaison affaiblies (18) en vue de leur rupture lors de l'assemblage.

2. Palier à roulement selon la revendication 1, caractérisé par le fait que les zones de liaison affaiblies sont placées de façon que la position axiale des deux parties de la pièce de retenue soit différente avant et après assemblage de façon à entraîner la rupture desdites zones de liaison lors de l'assemblage.

3. Palier à roulement selon les revendications 1 ou 2, caractérisé par le fait que la partie de la pièce de retenue (17, 33, 37) assurant la solidarisation axiale des deux bagues indépendantes (2, 3) comprend une douille (14, 39) munie de crochets (15, 16, 40) dirigés radialement, adaptés pour coopérer avec au moins une gorge (2a, 3a) pratiquée sur l'une desdites bagues indépendantes.

4. Palier à roulement selon la revendication 3, caractérisé par le fait que la douille (14, 39) présente des surfaces de butée axiales adaptées pour coopérer avec une surface correspondante de l'une des bagues indépendantes pour entraîner la rupture des zones de liaison (18) lors de l'assemblage.

5. Palier à roulement selon l'une quelconque des revendications précédentes, caractérisé par le fait que la partie de la pièce de retenue (17, 33) assurant la solidarisation axiale des deux bagues indépendantes (2, 3) comprend une douille (14) munie de deux rangées de crochets (15, 16) adaptés pour coopérer chacune avec une gorge pratiquée dans chacune desdites bagues indépendantes.

6. Palier à roulement selon la revendication 5, caractérisé par le fait que la partie de la pièce de retenue (17) assurant le maintien des éléments de roulement comprend une cage (10) munie d'alvéoles en quinconce (11, 12) recevant les éléments de roulement des deux rangées d'éléments de roulement (4, 5).

7. Palier à roulement selon la revendication 6, caractérisé par le fait que les deux parties de la pièce de retenue (17) sont solidaires, avant assemblage du palier, par l'intermédiaire d'au moins trois plots de liaison radiale (18) présentant une zone d'épaisseur réduite (19).

8. Palier à roulement selon la revendication 7, caractérisé par le fait que les plots de liaison (18) sont solidaires de la douille (14) dans un plan radial de symétrie de cette dernière et solidaires de la cage (10) en position décalée par rapport à un plan radial de symétrie du palier.

9. Palier à roulement selon la revendication 5, caractérisé par le fait que la partie de la pièce de retenue (33) assurant le maintien des éléments de roulement comprend une première cage (34) munie d'alvéoles (35) pour recevoir les éléments de roulement de l'une des rangées d'éléments de roulement (4), les éléments de roulement de l'autre rangée (5) étant retenus par une cage indépendante (36).

10. Palier à roulement selon la revendication 9, caractérisé par le fait que les deux parties de la pièce de retenue sont solidaires avant assemblage du palier par l'intermédiaire d'au moins trois plots de liaison radiale (18) présentant une zone d'épaisseur réduite (19).

11. Palier à roulement selon la revendication 10, caractérisé par le fait que les plots de liaison sont solidaires de la douille (14) dans un plan radial de symétrie de la douille et solidaire de la première cage précitée (34) en position décalée par rapport à un plan radial de symétrie du palier.

12. Palier à roulement selon l'une quelconque des revendications 1 à 4, caractérisé par le fait qu'il comprend deux pièces de retenue (37a, 37b) identiques montées symétriquement par rapport au plan radial de symétrie du palier, chaque pièce de retenue comprenant une cage (38) munie d'alvéoles (35) pour recevoir les éléments de roulement de l'une des rangées d'éléments de roulement et une douille (39) munie d'une rangée de crochets (40) adaptés pour coopérer avec une gorge pratiquée sur l'une des bagues indépendantes qui présente la piste de roulement pour l'autre rangée d'éléments de roulement.

13. Palier à roulement selon la revendication 12, caractérisé par le fait que les crochets (40) sont disposés à l'extrémité de languettes axiales (41) équidistantes séparées par des évidements complémentaires (42) de façon que les deux pièces de retenue (37a, 37b) puissent venir s'imbriquer l'une dans l'autre.

14. Palier à roulement selon la revendication 13, caractérisé par le fait que les crochets (40) de chaque pièce de retenue présentent une surface inclinée (44) complémentaire du fond (43) des évidements de l'autre pièce de retenue de façon à réaliser après assemblage un renforcement de l'action des crochets par conjugaison de formes des deux surfaces inclinées complémentaires.

15. Palier à roulement selon l'une quelconque des revendications 12 à 14, caractérisé par le fait que des plots de liaison radiale (18a, 18b) présentant une zone d'épaisseur réduite sont solidaires de la douille de chaque pièce de retenue (37a, 37b) dans un plan radial de symétrie du palier et solidaires de la cage (38a, 38b) en position décalée par rapport à un plan radial de symétrie du palier.

16. Palier à roulement selon l'une quelconque des revendications précédentes, caractérisé par le fait que les bagues indépendantes forment la bague intérieure du palier.

17. Palier à roulement selon l'une quelconque des revendications 1 à 15, caractérisé par le fait que les deux bagues indépendantes forment la bague extérieure du palier.

18. Pièce de retenue en matière plastique moulée présentant une partie en forme de cage cylindrique munie d'alvéoles capables de recevoir des éléments de roulement d'un palier à roulement à deux rangées d'éléments de roulement du type comportant une première bague constituée d'une seule pièce et un ensemble de deux bagues indépendantes, caractérisée par le fait qu'elle comprend en outre, venue de moulage, une douille (14, 39) concentrique à la cage (10, 34, 38) et reliée à cette dernière par une ou plusieurs zones de liaison affaiblies en vue de leur rupture au cours de l'assemblage du palier.

19. Pièce de retenue selon la revendication 18, caractérisée par le fait que la douille (14, 39) présente une pluralité de crochets (15, 16, 40) dirigés radialement.

20. Pièce de retenue selon la revendication 18 ou 19, caractérisée par le fait que la douille (14, 39) est reliée à la cage par au moins trois plots de liaison radiale (18) présentant une zone d'épaisseur réduite (19).

21. Pièce de retenue selon la revendication 20, caractérisée par le fait que les plots de liaison (18) sont solidaires de la douille (14) dans un plan radial de symétrie de la douille (14) et solidaires de la cage (10) dans une position décalée par rapport au plan radial de symétrie de la cage.

22. Procédé d'assemblage d'un palier à roulement à deux rangées d'éléments de roulement selon l'une quelconque des revendications 1 à 11, caractérisé par le fait qu'il comprend les étapes suivantes :

on introduit les éléments de roulement dans la partie formant cage (10, 34) de la pièce de retenue (17, 33),

on place l'ensemble sur les pistes de roulement de la bague (1) constituée d'une seule pièce,

on introduit axialement les deux bagues indépendantes (2, 3) jusqu'à ce qu'elles viennent en butée sur les bords de la partie en forme de douille (14) de la pièce de retenue (17, 33),

on exerce une poussée axiale sur les bagues indépendantes (2, 3) jusqu'à ce qu'une rangée de crochets (15, 16) de la douille pénètre dans la gorge (2a, 3a) de l'une des bagues indépendantes et vienne en butée sur ladite bague indépendante,

on poursuit l'action de poussée axiale sur les bagues indépendantes jusqu'à la rupture des zones de liaison affaiblies (18) de la pièce de retenue et la pénétration de l'autre rangée de crochets dans la gorge de l'autre bague indépendante.

23. Procédé d'assemblage d'un palier à roulement à deux rangées d'éléments de roulement selon l'une quelconque des revendications 12 à 15, caractérisé par le fait qu'il comprend les étapes suivantes :

on introduit les éléments de roulement (4, 5) dans la partie formant cage de chaque pièce de retenue (37a, 37b),

on place l'ensemble sur les pistes de roulement de la bague (1) constituée d'une seule pièce,

on introduit axialement les deux bagues indépendantes (2, 3) jusqu'à ce qu'elles viennent en butée sur les bords de la partie en forme de douille (39a, 39b) de chaque pièce de retenue, les parties formant cage (38a, 38b) des deux pièces de retenue venant par ailleurs en butée l'une contre l'autre,

on exerce une poussée axiale sur les bagues indépendantes (2, 3) jusqu'à la rupture des zones de liaison affaiblies (18) de l'une des pièces de retenue et la pénétration des crochets de cette pièce de retenue dans la gorge de l'une des bagues indépendantes,

on poursuit l'action de poussée axiale sur les bagues indépendantes jusqu'à la rupture des zones de liaison affaiblies (18) de l'autre pièce de retenue et la pénétration des crochets de cette autre pièce de retenue dans la gorge de l'autre bague indépendante.

**Claims**

1. Rolling bearing with two rows of rolling elements (4, 5), comprising a first race (1) composed of a single piece having two rolling tracks, and a group of two independent races (2, 3) each having a rolling track, as well as means for maintaining the relative positions of the rolling elements between the races and means for the axial interlocking of the two independent races, characterized by the fact that the axial interlocking of the two independent races (2, 3) and the maintenance of the relative positions of at least a part of the rolling elements are effected by two parts of a holding piece (17, 33, 37) having, before assembly of the bearing, one or several weakened linkage zones (18) with a view to their breaking during assembly.

2. Rolling bearing in accordance with claim 1, characterized by the fact that the weakened linkage zones are placed so that the axial position of the two parts of the holding piece is different before and after assembly so as to bring about the breaking of the said linkage zones during assembly.

3. Rolling bearing in accordance with claims 1 or 2, characterized by the fact that the part of the holding piece (17, 33, 37) ensuring the axial interlocking of the two independent races (2, 3) comprises a sleeve (14, 39) equipped with radially directed hooks (15, 16, 40) which are adapted to co-operate with at least one recess (2a, 3a) made on one of the said independent races.

4. Rolling bearing in accordance with claim 3, characterized by the fact the sleeve (14, 39) has axial abutment surfaces adapted to co-operate with a corresponding surface of one of the independent races in order to bring about the breaking of the linkage zones (18) during assembly.

5. Rolling bearing according to any one of the preceding claims, characterized by the fact that the part of the holding piece (17, 33) ensuring the axial interlocking of the two independent races (2, 3) comprises a sleeve (14) equipped with two rows of hooks (15, 16) adapted to each co-operate with a recess made in each of the said independent races.

6. Rolling bearing in accordance with claim 5, characterized by the fact that the part of the holding piece (17) ensuring the maintenance of the rolling elements comprises a cage (10) equipped with staggered cells (11, 12) receiving the rolling elements of the two rows of rolling elements (4, 5).

7. Rolling bearing in accordance with claim 6, characterized by the fact that the two parts of the holding piece (17) are integral, before assembly of the bearing, by means of at least three radial studs for linkage (18), these studs having a zone of reduced thickness (19).

8. Rolling bearing in accordance with claim 7, characterized by the fact that the linkage studs (18) are integral with the sleeve (14) in a radial plane of symmetry of the latter and integral with the cage (10) in an offset position in relation to a radial plane of symmetry of the bearing.

9. Rolling bearing in accordance with claim 5, characterized by the fact that the part of the holding piece (33) ensuring the maintenance of the rolling elements comprises a first cage (34) equipped with cells (35) to receive the rolling elements of one of the rows of rolling elements (4), the rolling elements of the other row (5) being held by an independent cage (36).

10. Rolling bearing in accordance with claim 9, characterized by the fact that the two parts of the holding piece are integral before assembly of the bearing by means of at least three radial linkage studs (18) having a zone of reduced thickness (19).

11. Rolling bearing in accordance with claim 10, characterized by the fact that the studs for linkage are integral with the sleeve (14) in a radial plane of symmetry of the sleeve and integral with the above-mentioned first cage (34) in an offset position in relation to a radial plane of symmetry of the bearing.

12. Rolling bearing according to any one of claims 1 to 4, characterized by the fact that it comprises two identical holding pieces (37a, 37b) which are mounted symmetrically in relation to the radial plane of symmetry of the bearing, each holding piece comprising a cage (38) equipped with cells (35) to receive the rolling elements of one of the rows of rolling elements and a sleeve (39) equipped with a row of hooks (40) adapted to co-operate with a recess made on one of the independent races which is provided with the rolling track for the other row of rolling elements.

13. Rolling bearing in accordance with claim 12, characterized by the fact that the hooks (40) are arranged at the extremity of equidistant axial tongues (41) which are separated by complementary cavities (42) so that the two holding pieces (37a, 37b) can overlap in one another.

14. Rolling bearing in accordance with claim 13, characterized by the fact that the hooks (40) of each holding piece have an inclined surface (44), complementary to the base (43) of the recesses (42) of the other holding piece so as to effect, after assembly, a reinforcement of the action of the hooks by uniting of shapes of the two complementary inclined surfaces.

15. Rolling bearing in accordance with any one of claims 12 to 14, characterized by the fact that the radial linkage studs (18a, 18b), having a zone of reduced thickness, are integral with the sleeve of each holding piece (37a, 37b) in a radial plane of symmetry of the bearing and integral with the cage (38a, 38b) in an offset position in relation to a radial plane of symmetry of the bearing.

16. Rolling bearing in accordance with any one of the preceding claims, characterized by the fact that the independent races form the inner race of the bearing.

17. Rolling bearing in accordance with any one of claims 1 to 15, characterized by the fact that the two independent races form the outer race of the bearing.

18. Holding piece made out of a moulded plastic material, having a part in the form of a cylindrical cage equipped with cells capable of receiving rolling elements of a rolling bearing with two rows of rolling elements, this rolling bearing being of the type comprising a single-piece first race and a group of two independent races characterized by the fact that the holding pieces further comprises a moulded sleeve (14, 39) which is concentric to the cage (10, 34, 38) and joined to the latter by one or several linkage zones weakened with a view to their breaking during the assembly of the bearing.

19. Holding piece in accordance with claim 18, characterized by the fact that the sleeve (14, 39) has a plurality of radially directed hooks (15, 16, 40).

20. Holding piece in accordance with claim 18 or 19, characterized by the fact that the sleeve (14, 39) is joined to the cage by at least three radial linkage studs (18) having a zone of reduced thickness (19).

21. Holding piece in accordance with claim 20, characterized by the fact that the linkage studs (18) are integral with the sleeve (14) in a radial plane of symmetry of the sleeve (14) and integral with the cage (10) in an offset position in relation to the radial plane of symmetry of the cage.

22. Assembly process for a rolling bearing, with two rows of rolling elements, in accordance with any one of claims 1 to 11, characterized by the fact that it comprises the following steps :

the rolling elements are introduced into the part forming a cage (10, 34) of the holding piece (17, 33),

the unit is placed on the rolling tracks of the race (1) composed of a single piece,

the two independent races (2, 3) are introduced axially until they abut on the edges of the part of the holding piece (17, 33) which is in the form of a sleeve (14),

an axial thrust is exerted on the independent races (2, 3) until a row of hooks (15, 16) of the sleeve penetrates into the recess (2a, 3a) of one of the independent races and abuts on the said independent race,

the axial thrust action on the independent races is continued until the breaking of the weakened linkage zones (18) of the holding piece and the penetration of the other row of hooks into the recess of the other independent race.

23. Process for assembling a bearing, with two rows of rolling elements, in accordance with any one of claims 12 to 15, characterized by the fact that it comprises the following steps :

the rolling elements are introduced into the part forming a cage of each holding piece (37a, 37b),

the unit is placed on the rolling tracks of the race (1) composed of a single piece,

the two independent races (2, 3) are introduced axially until they abut on the edges of the part of each holding piece which is in the form of a sleeve (39a, 39b), the parts forming a cage (38a, 38b) of the two holding pieces coming furthermore to abut one against the other,

an axial thrust is exerted on the independent races (2, 3) until the breaking of the weakened linkage zones (18) of one of the holding pieces and the penetration of the hooks of this holding piece into the recess of one of the independent races,

the axial thrust action on the independent races is continued until the breaking of the weakened linkage zones (18) of the other holding piece and the penetration of the hooks of this other holding piece into the recess of the other independent race.

**Patentansprüche**

1. Zweireihiges Wälzlager mit einem aus einem Stück bestehenden ersten Ring (1) mit zwei Wälzbahnen, mit einem Satz aus zwei unabhängigen Ringen (2, 3) mit jeweils einer Wälzbahn, mit Mitteln zur Sicherung der relativen Positionen der Wälzkörper zwischen den Ringen sowie mit Mitteln zur axialen Festlegung der beiden unabhängigen Ringe, dadurch gekennzeichnet, daß die axiale Festlegung der beiden unabhängigen Ringe (2, 3) und die Sicherung der relativen Positionen wenigstens eines Teils der Wälzkörper durch zwei Teile eines Haltestücks (17, 33, 47) erfolgen, das vor dem Zusammenbau des Lagers eine oder mehrere Verbindungszonen (18) besitzt, die so geschwächt sind, daß sie beim Zusammenbau brechen.

2. Wälzlager nach Anspruch 1, dadurch gekennzeichnet, daß die geschwächten Verbindungszonen räumlich so angeordnet sind, daß die axiale Position der beiden Teile des Haltestücks vor und nach dem Zusammenbau unterschiedlich ist, derart daß sie beim Zusammenbau des Lagers den Bruch der genannten Verbindungszonen herbeiführen.

3. Wälzlager nach Anspruch 1 oder 2, dadurch gekennzeichnet, daß derjenige Teil des Haltestücks (17, 33, 37), der die axiale Festlegung der beiden unabhängigen Ringe (2, 3) bewirkt, eine Buchse (14, 39) umfaßt, die mit in radialer Richtung orientierten Haken (15, 16, 40) ausgestattet ist, die so ausgebildet sind, daß sie mit wenigstens einer an einem der unabhängigen Ringe augebildeten Kehle (2a, 3a) zusammenwirken können.

4. Wälzlager nach Anspruch 3, dadurch gekennzeichnet, daß die Buchse (14, 39) axiale Anschlagflächen besitzt, die so ausgebildet sind, daß sie mit einer korrespondierenden Fläche eines der beiden unabhängigen Ringe in der Weise zusammenwirken können, daß beim Zusammenbau der Bruch der Verbindungszonen (18) herbeigeführt wird.

5. Wälzlager nach einem der vorhergehenden Ansprüche, dadurch gekennzeichnet, daß derjenige Teil des Haltestücks (17, 33), der die axiale Festlegung der beiden unabhängigen Ringe (2, 3) bewirkt, eine Buchse (14) mit zwei Reihen von Haken (15, 16) aufweist, die so ausgebildet sind, daß jede von ihnen mit jeweils einer in jedem der beiden unabhängigen Ringe ausgebildeten Kehle zusammenwirken kann.

6. Wälzlager nach Anspruch 5, dadurch gekennzeichnet, daß derjenige Teil des Haltestücks (17), der die Halterung der Wälzkörper sichert, einen Käfig (10) umfaßt, der mit versetzt angeordneten Zellen (11, 12) versehen ist, die die Wälzkörper der beiden Reihen (4, 5) von Wälzkörpern aufnehmen.

7. Wälzlager nach Anspruch 6, dadurch gekennzeichnet, daß die beiden Teile des Haltestücks (17) vor dem Zusammenbau des Lagers durch wenigstens drei radiale Verbindungszapfen (18) miteinander verbunden sind, die eine Zone (19) verringerter Wandstärke aufweisen.

8. Wälzlager nach Anspruch 7, dadurch gekennzeichnet, daß die Verbindungszapfen (18) mit der Buchse (14) in einer radialen Symmetrieebene der letzteren und mit dem Käfig (10) in einer gegenüber einer radialen Symmetrieebene des Lagers versetzten Position fest verbunden sind.

9. Wälzlager nach Anspruch 5, dadurch gekennzeichnet, daß derjenige Teil des Haltestücks (33), der die Halterung der Wälzkörper bewirkt, einen ersten Käfig (34) mit Zellen zur Aufnahme der Wälzkörper einer (4) der beiden Reihen von Wälzkörpern aufweist, und daß die Wälzkörper der anderen Reihe (5) von einem unabhängigen Käfig (36) gehalten sind.

10. Wälzlager nach Anspruch 9, dadurch gekennzeichnet, daß die beiden Teile des Haltestücks vor dem Zusammenbau des Lagers durch wenigstens drei Verbindungszapfen (18) mit einer Zone (19) verringerter Wandstärke miteinander verbunden sind.

11. Wälzlager nach Anspruch 10, dadurch gekennzeichnet, daß die Verbindungszapfen mit der Buchse (14) in einer radialen Symmetrieebene der Buchse mit dem genannten ersten Käfig (34) in einer gegenüber einer radialen Symmetrieebene des Lagers versetzten Position verbunden sind.

12. Wälzlager nach einem der Ansprüche 1 bis 4, dadurch gekennzeichnet, daß zwei identische Haltestücke (37a, 37b) vorgesehen sind, die symmetrisch zur radialen Symmetrieebene des Lagers montiert sind, und daß jedes Haltestück einen Käfig (38) mit Zellen zur Aufnahme der Wälzkörper einer der Reihen von Wälzkörpern sowie eine Buchse (39) mit einer Reihe von Haken (40) aufweist, die so ausgebildet sind, daß sie mit einer Kehle Zusammenwirken können, die an demjenigen der unabhängigen Ringe ausgebildet ist, der die Wälzbahn für die andere Reihe von Wälzkörpern trägt.

13. Wälzlager nach Anspruch 12, dadurch gekennzeichnet, daß die Haken (40) sich an den Enden von äquidistant angeordneten axialen Zungen (41) befinden, die durch komplementäre Ausnehmungen (42) voneinander getrennt sind, so daß die beiden Haltestücke (37a, 37b) ineinander verzahnt werden können.

14. Wälzlager nach Anspruch 13, dadurch gekennzeichnet, daß die Haken (40) jedes Haltestücks eine Neigungsfläche (44) besitzen, die zum Boden (43) der Ausnehmungen des jeweils anderen Haltestücks komplementär ist, so daß nach dem Zusammenbau eine Verstärkung der Wirkung der Haken durch Formpaarung der beiden komplementären Neigungsflächen erfolgt.

15. Wälzlager nach einem der Ansprüche 12 bis 14, dadurch gekennzeichnet, daß die mit einer Zone verringerter Wandstärke ausgestatteten radialen Verbindungszapfen (18a, 18b) mit der Buchse jedes Haltestücks (37a, 37b) in einer radialen Symmetrieebene des Lagers mit dem Käfig (38a, 38b) in einer gegenüber einer radialen Symmetrieebene des Lagers versetzten Position verbunden sind.

16. Wälzlager nach einem der vorhergehenden Ansprüche, dadurch gekennzeichnet, daß die unabhängigen Ringe den Innenring des Lagers bilden.

17. Wälzlager nach einem der Ansprüche 1 bis 15, dadurch gekennzeichnet, daß die unabhängigen Ringe den Außenring des Lagers bilden.

18. Als Formteil ausgebildetes Haltestück aus Kunststoff mit einem Teil in Form eines zylindrischen Käfigs mit Zellen zur Aufnahme von Wälzkörpern eines zweireihigen Wälzlagers, das einen aus einem Stück bestehenden ersten Ring und einen Satz von zwei unabhängigen Ringen aufweist, dadurch gekennzeichnet, daß das Haltestück ferner eine einstückig angeformte Buchse (39) besitzt, die konzentrisch zu dem Käfig (10, 34, 38) angeordnet und mit diesem durch eine oder mehrere geschwächte Verbindungszonen (18) verbunden ist, die beim Zusammenbau des Lagers brechen.

19. Haltestück nach Anspruch 18, dadurch gekennzeichnet, daß die Buchse (14, 39) mehrere radial ausgerichtete Haken (15, 16, 40) aufweist.

20. Haltestück nach Anspruch 18 oder 19, dadurch gekennzeichnet, daß die Buchse (14, 39) mit dem Käfig durch wenigstens drei radiale Verbindungszapfen (18) mit einer Zone (18) mit verringerter Wandstärke verbunden sind.

21. Haltestück nach Anspruch 20, dadurch gekennzeichnet, daß die Verbindungszapfen (18) mit der Buchse (14) in einer radialen Symmetrieebene der letzteren und mit dem Käfig (10) in einer gegenüber der radialen Symmetrieebene des Lagers versetzten Position fest verbunden sind.

22. Verfahren zum Zusammenbau eines Wälzlagers mit zwei Reihen von Wälzkörpern nach einem der Ansprüche 1 bis 11, gekennzeichnet durch folgende Verfahrensschritte : man führt die Wälzkörper in den den Käfig (10, 34) bildenden Teil des Haltestücks (17, 33) ein,

man plaziert die so gebildete Anordnung auf den Wälzbahnen des aus einem Stück bestehenden Rings (1),

man führt die beiden unabhängigen Ringe (2, 3) in axialer Richtung ein, bis sie an den Rändern des die Buchse (14) bildenden Teils des Haltestücks (17, 33) zur Anlage kommen,

man übt auf die unabhängigen Ringe (2, 3) eine axiale Druckkraft aus, bis eine Reihe von Haken (15, 16) der Buchse in die Kehle (2a, 3a) eines der beiden unabhängigen Ringe eindringt und an diesem unabhängigen Ring zur Anlage kommt,

man setzt die Einwirkung der axialen Druckkraft auf die unabhängigen Ringe solange fort, bis die geschwächten Verbindungszonen (18) des Haltestücks zerbrechen und die andere Reihe von Haken in die Kehle des anderen unabhängigen Rings eindringt.

23. Verfahren zum Zusammenbau eines Wälzlagers mit zwei Reihen von Wälzkörpern nach einem der Ansprüche 12 bis 15, gekennzeichnet durch folgende Verfahrensschritte :

man führt die Wälzkörper in den den Käfig bildenden Teil jedes Haltestücks (37a, 37b) ein,

man plaziert die so gebildete Anordnung auf den Wälzbahnen des aus einem Stück bestehenden Rings (1),

man führt die beiden unabhängigen Ringe (2, 3) in axialer Richtung ein, bis sie an den Rändern des die Buchse (39a, 39b) bildenden Teils der einzelnen Haltestücke zur Anlage kommen, wobei die den Käfig bildenden Teile (38a, 38b) der beiden Haltestücke außerdem aneinander zur Anlage kommen,

man übt auf die unabhängigen Ringe (2, 3) eine axiale Druckkkraft aus, bis die geschwächten Verbindungszonen (18) eines der Haltestücke brechen und die Haken dieses Haltestücks in die Kehle eines der beiden unabhängigen Ringe eindringen,

man setzt die Einwirkung der axialen Druckkraft auf die unabhängigen Ringe solange fort, bis die geschwächten Verbindungszonen (18) des anderen Haltestücks zerbrechen und die Haken dieses anderen Haltestücks in die Kehle des anderen unabhängigen Rings eindringen.

EP 0 241 879 B1

FIG.1

# FIG. 2

FIG.3

FIG.4

FIG.5

FIG.6

FIG.7

4

## FIG.8

# FIG.9

FIG.10

FIG.11

FIG.12

FIG.13

FIG.14

FIG.15

FIG.16

FIG.17

## FIG.18

# FIG.19

FIG.20

FIG.21

FIG.22

13

FIG.23

FIG.24

FIG.25